# EUROPEAN PATENT SPECIFICATION

(11) **EP 0 576 080 B1**
(45) Date of publication and mention of the grant of the patent: **18.09.2002**
(21) Application number: 93201752.8
(22) Date of filing: 18.06.1993
(51) Int. Cl.: H04N 5/14, H04N 7/01

(54) **Picture signal processing mode control**
Verfahren und Anordnung zum Steuern eines Bildsignalverarbeitungsmodus
Procédé et appareil pour commander un mode de traitement de signal d'image

(30) Priority: 26.06.1992 EP 92201895
(43) Date of publication of application: 29.12.1993
(60) Divisional application: 02075118.6
(73) Proprietor: Koninklijke Philips Electronics N.V., 5621 BA Eindhoven (NL)
(72) Inventor: De Haan, Gerard, Int. Octrooibureau B.V., NL-5656 AA Eindhoven (NL); Huijgen, Hendrik, Int. Octrooibureau B.V., NL-5656 AA Eindhoven (NL); Biezen, Paul W. A. C., Int. Octrooibureau B.V., NL-5656 AA Eindhoven (NL); Ojo, Olukayode Anthony, Int. Octrooibureau B.V., NL-5656 AA Eindhoven (NL)
(74) Representative: Steenbeek, Leonardus Johannes

(56) References cited:
- EP-A- 0 359 334
- EP-A- 0 514 012
- US-A- 4 864 398
- US-A- 4 881 125
- US-A- 4 998 287

## Description

The invention relates to a method of and apparatus for controlling a picture signal processing mode. The picture signal processing mode may indicate whether the picture signal originates from movie-film and, more specifically, how the fields of the picture signal relate to the pictures of the movie-film, or whether motion vectors are reliable enough to allow for a motion-compensated picture signal processing mode. The invention further relates to a television signal receiver including such a picture signal processing mode controlling apparatus.

Many recent proposals for novel High-Definition Television (HDTV) systems include the requirement that a control signal is to be transmitted along with the HDTV signal which gives an indication about the origin of the picture signal, because in some respects, picture signals originating from movie-film require a different treatment, *i.e.* picture signal processing mode, than picture signals which are picked up by a camera. For similar reasons, up-conversion algorithms to be used in Improved Definition Television (IDTV) receivers require a picture signal processing mode control signal which provides information about the origin of the picture signal. Up till now, no reliable and yet simple method of automatically detecting whether the picture signal originates from movie-film has been reported. Another problem met in IDTV receivers is that motion-compensated picture signal processing methods are potentially very suitable to provide an improved display quality of the picture signal, but that artifacts caused by motion vector estimation errors are very disturbing. Consequently, there is a need to determine when motion vectors are reliable enough to allow for a motion-compensated picture signal processing mode, and when the motion-compensated picture signal processing mode should be switched off in view of the unreliability of the motion vectors.

US-A-4,864,398 discloses a television standards converter comprising a motion analyzer for analyzing the motion between consecutive fields of an input television signal. Its Fig. 12 shows a comparator receiving motion vectors from three consecutive fields to determine some erroneous conditions and some picture content information. From the comparison it can be determined whether the motion of an object stopped, whether there has been a motion vector calculation error, or whether there exists a continuous motion.

EP 359 334 A discloses a method of generating picture signal processing mode control signals which indicate whether the picture signal originates from movie-film. It further discloses the indication of whether picture signals originate from movie-film by detecting whether motion is only present per picture period. In another context, it discloses determining first motion vectors for a first field and second motion vectors for a second field.

US 4 998 287 A compares field n and field n-2 to determine whether the video signal received was derived from film. This document refers to a motion detector.

It is, *inter alia*, an object of the invention to provide a simple and reliable picture signal processing control. For this purpose, the invention provides a picture signal processing control as well as a receiver for television signals using such a picture signal processing control signal, as defined in the independent claims. Advantageous embodiments of the invention are defined in the subclaims.

The invention is based on the recognition that when a picture signal processor already comprises a motion vector estimator for furnishing motion vectors, a simple comparison of the motion vectors estimated for successive fields provides a reliable indication of whether the picture signal originates from film and, more specifically, how the television picture signal fields relate to the movie-film pictures. As 24 Hz film pictures are usually converted into 50 Hz television fields by scanning each film picture twice, there is no motion between the television fields which correspond to the same film picture, while there will be a finite amount of motion between television fields which do not correspond to the same film picture. A comparison of the sum of the lengths of the motion vectors of two successive fields will thus provide sufficient information about the source of the picture signal.

As the transition between two successive film pictures may occur either between an even and an odd television field or between an odd and an even television field, two different film phases are possible. The first option is standardized for broadcasting, while television signals on laser vision discs have been recorded by using the second option. The option which has been used can easily be detected by a similar observation of the lengths of the motion vectors.

These and other aspects of the invention will be apparent from and elucidated with reference to the embodiments described hereinafter.

In the drawings:

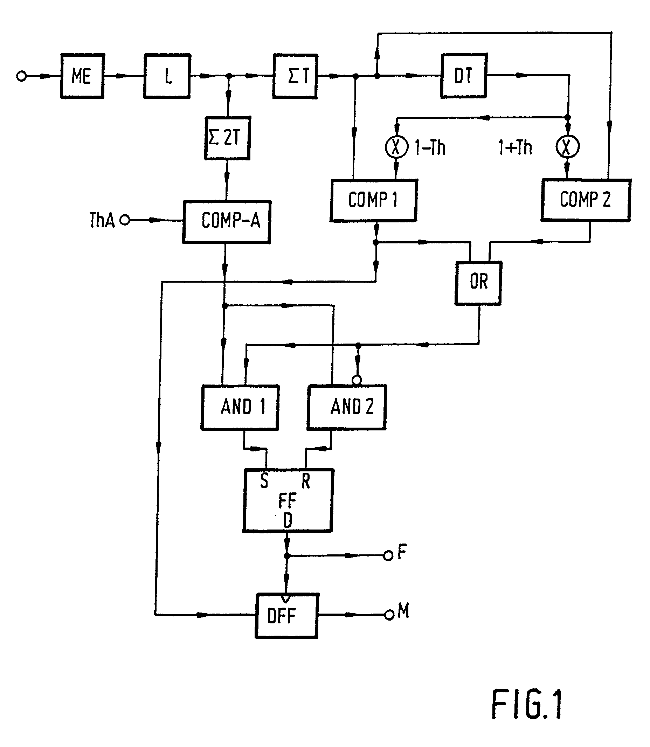

Fig. 1 shows an embodiment of a first apparatus in accordance with the invention for determining whether picture signals originate from movie-film.

In Fig. 1, a picture signal is applied to a motion vector estimator ME. The motion vectors estimated by the motion vector estimator ME are applied to a length-determining circuit L, which may determine the true length of the motion vectors by taking the root of the sum of the squares of horizontal and vertical components of the motion vectors, or which may simply sum the absolute values of these components. The output of the length determining circuit L is applied to a first summing circuit Σ_{2T} which determines the sum of the motion vectors of two subsequent field periods. This sum is a measure of the amount of activity in the picture signal and is thus called the activity signal. The output of the first summing circuit Σ_{2T} is compared to an activity threshold ThA by an activity comparator COMP-A to obtain an activity enable signal. The arrangement will only change its decisions about whether the picture signal originates from film if there is sufficient motion in the picture to warrant a reasonably reliable decision.

The output of the length determining circuit L is also applied to a second summing circuit Σ_{T} which determines the sum of the motion vectors of the present field period. The output of the second summing circuit Σ_{T} is delayed by a field period T by a delay circuit D_{T} which furnishes the summed vector lengths of a previous field period. The output of the delay circuit D_{T} is multiplied by 1-Th and by 1+Th so as to ensure that a decision that the picture fields originate from movie-film is only taken if the summed vector length of the present field is smaller than the summed vector length of the previous field by more than a first given threshold or if the summed vector length of the present field is larger than the summed vector length of the previous field by more than a second given threshold. To this end, the output of the second summing circuit Σ_{T} is applied to first inputs of first and second comparators COMP1 and COMP2, whose second inputs are coupled to the output of the delay circuit D_{T} through multipliers which multiply by 1-Th and 1+Th, respectively. A logic OR-circuit combines the outputs of the comparators COMP1 and COMP2. The output of the logic OR-circuit is applied to a non-inverting input of a first logic AND-circuit AND1 and to an inverting input of a second logic AND-circuit AND2, which logic AND-circuits further receive the activity enable signal from the comparator COMP-A. The output of the first logic AND-circuit AND1 is coupled to a set input S of a set-reset flipflop FF. The output of the second logic AND-circuit AND2 is coupled to a reset input R of the set-reset flipflop FF. A data output D of the flipflop FF supplies a film indication signal F.

To determine whether the transition between two successive film pictures is between an even and an odd field or between an odd and an even field, the data output D of the flipflop FF is coupled to a clock input of a D-flipflop DFF, whose data input is coupled to the output of the first comparator COMP1. The D-flipflop DFF supplies a transition mode indication signal M which is positive if the transition between two film pictures is between an even and an odd television field. The indication signals F and M can be applied for controlling the operation of a subsequent picture signal processing unit.

The arrangement shown in Fig. 1 operates as follows: if the summed vector lengths of two successive fields do not differ too much, the output of the logic OR-circuit will be logic zero, and the flipflop FF will be reset to indicate that the television picture fields do not originate from film. If on the other hand, either one of the comparators COMP1 and COMP2 indicates a difference between the summed vector lengths by more than a given threshold, the output of the logic OR-circuit will be logic one, and the flipflop FF will be set to indicate that the television picture fields originate from film. When the comparisons are made during even field periods, a positive output of comparator COMP1 which indicates that the vectors of the present even field to the previous odd field are smaller than the vectors of the previous odd field to its preceding even field, also indicates that the present even field and the previous odd field correspond to the same film picture, so that the transition between two film pictures will take place between the present even field and the next odd field. Such a positive output of the first comparator can thus easily be used to indicate that the movie-film source material is scanned in the manner standardized for broadcasting.

The above description clearly shows that a simple comparison of motion vectors determined for successive fields can easily be used to determine the picture signal processing mode and, more specifically, whether and how the picture signal processing should be adapted for movie-film originated pictures. The comparisons are preferably related to the total amount of motion in the picture, which can very simply be determined by adding the motion vector lengths of a television frame period. Switching between a movie-film adapted processing mode and a non-movie-film adapted processing mode is preferably only made when there is enough motion in the picture to warrant a reliable decision. As there will be no motion between the two television fields which originate from the same movie-film picture, the presence of movie-film originated television signals can very simply be determined by comparing the sums of the motion vector lengths of two field periods. More specifically, movie-film originated picture signals can be deemed to be present when the sum of the motion vector lengths of one field does not differ from the sum of the motion vector lengths of the other field by more than given thresholds. These thresholds are preferably related to the sum of the motion vector lengths, which can easily be obtained by multiplying the vector length sum of one of the fields by 1-Th and by 1+Th to obtain the range between which the vector length sum of the other field should be when non-movie-film originated picture signals are present.

## Claims

1. A method of generating picture signal processing mode control signals (F, M), the method comprising the steps of:
determining (ME) first motion vectors for a first field, and second motion vectors for a successive second field of a picture signal; and
comparing (L, ΣT, DT, COMP1, COMP2) said first and second motion vectors to obtain picture signal processing mode control signals (F, M) that indicate whether said picture signal originates from movie-film.

2. A method as claimed in claim 1, wherein said comparing step comprises the further steps of:
determining (L, Σ2T) a sum of lengths of said first and second motion vectors to obtain an activity signal; and
changing (COMP-A, AND1, AND2, FF) said picture signal processing mode control signals (F, M) only when said activity signal has a predetermined relation (COMP-A) with an activity threshold (ThA).

3. A method as claimed in claim 2, wherein said picture signal processing mode control signals (F, M) are only changed when said activity signal exceeds (COMP-A) said activity threshold (ThA).

4. A method as claimed in claim 1, wherein said comparing step comprises the further steps of:
determining (ΣT, DT) a first total of lengths of said first motion vectors, and a second total of lengths of said second motion vectors; and
changing said picture signal processing mode control signals (F, M) to indicate movie-film when (COMP1, COMP2, OR) said first and second totals differ by more than given thresholds (Th), and to indicate non-movie-film when said first and second totals differ by less than said given thresholds (Th).

5. A method as claimed in claim 4 wherein said given thresholds (Th) depend on said first or said second total (ΣT).

6. A method as claimed in claim 4, wherein said picture signal processing mode control signals (F, M) indicate a first type of movie-film originating picture signals when said first total is smaller than said second total by more than a first given threshold (Th), while said picture signal processing mode control signals (F, M) indicate a second type of movie-film originating picture signals when said first total is larger than said second total by more than a second given threshold (Th).

7. A method as claimed in claim 1, wherein said picture signal processing mode control signals (F, M) indicate how the fields of the picture signal relate to pictures of the movie film.

8. An apparatus for generating picture signal processing mode control signals (F, M), the apparatus comprising:
means (ME) for determining first motion vectors for a first field, and second motion vectors for a successive second field of a picture signal; and
means (L, ΣT, DT, COMP1, COMP2) for comparing said first and second motion vectors to obtain picture signal processing mode control signals (F, M) that indicate whether said picture signal originates from movie-film.

9. A receiver for television signals, comprising:
means for receiving and decoding said television signals to obtain picture signals;
means coupled to said receiving and decoding means for enhancing said picture signals;
**characterized in that** said enhancing means include an apparatus for generating picture signal processing mode control signals as defined in claim 8.

## Patentansprüche

1. Verfahren zum Erzeugen von Bildsignalverarbeitungsmode-Steuersignalen (F, M), wobei dieses Verfahren die nachfolgenden Verfahrensschritte umfasst:
- das Bestimmen (ME) erster Bewegungsvektoren für ein erstes Teilbild, und zweite Bewegungsvektoren für ein nachfolgendes zweiten Teilbild eines Bildsignals; und
- das Vergleichen (L, ΣT, DT, COMP1, COMP2) der genannten ersten und zweiten Bewegungsvektoren zum Erhalten von Bildsignalverarbeitungsmode-Steuersignalen (F, M), die angeben, ob das genannte Bildsignal von einem Kinofilm herrührt.

2. Verfahren nach Anspruch 1, wobei der genannte Vergleichsschritt die nachfolgenden weiteren Schritte umfasst:
- das Ermitteln (L, Σ2T) einer Summe von Längen des ersten und des zweiten Bewegungsvektors, zum Erhalten eines Aktivitätensignals; und
- das Ändern (COMP-A, AND1, AND2, FF) der genannten Bildsignalverarbeitungsmode-Steuersignale (F, M) nur dann, wenn das genannte Aktivitätensignal eine vorbestimmte Beziehung (COMP-A) mit einer Aktivitätenschwelle (ThA) hat.

3. Verfahren nach Anspruch 2, wobei die genannten Bildsignalverarbeitungsmode-Steuersignale (F, M) nur dann geändert werden, wenn das genannte Aktivitätensignal (COMP-A) die genannte Aktivitätenschwelle (ThA) übersteigt.

4. Verfahren nach Anspruch 1, wobei der genannte Vergleichsschritt die weiteren Verfahrensschritte umfasst:
- das Bestimmen (ΣT, DT) eines ersten Gesamtbetrags der Längen der genannten ersten Bewegungsvektoren, und eines zweiten Gesamtbetrags der Längen der genannten zweiten Bewegungsvektoren; und
- das Ändern der genannten Bildsignalverarbeitungsmode-Steuersignale (F, M) um Kinofilm anzugeben, wenn (COMP1, COMP2, OR) der genannte erste und zweite Gesamtbetrag um mehr als die gegebenen Schwellen (Th) voneinander abweichen und um Nicht-Kinofilm anzugeben, wenn der genannte erste und zweite Gesamtbetrag um weniger als die genannten gegebenen Schwellen (Th) voneinander abweichen.

5. Verfahren nach Anspruch 4, wobei die genannten gegebenen Schwellen (Th) von dem genannten ersten oder zweiten Gesamtbetrag (ΣT) abhängig sind.

6. Verfahren nach Anspruch 4, wobei die genannten Bildsignalverarbeitungsmode-Steuersignale (F, M) einen ersten Typ von einem Kinofilm herrührender Bildsignale angeben, wenn der genannte erste Gesamtbetrag um mehr als eine erste gegebene Schwelle (Th) kleiner ist als der genannte zweite Gesamtbetrag, während die genannten Bildsignalverarbeitungsmode-Steuersignale (F,M) einen zweiten Typ von einem Kinofilm herrührender Bildsignale angeben, wenn der genannte erste Gesamtbetrag um mehr als eine zweite gegebene Schwelle (Th) größer ist als der genannte zweite Gesamtbetrag.

7. Verfahren nach Anspruch 1, wobei die genannten Bildsignalverarbeitungsmode-Steuersignale (F, M) angeben, wie sich die Teilbilder des Bildsignals zu Bildern des Kinofilms verhalten.

8. Anordnung zum Erzeugen von Bildsignalverarbeitungsmode-Steuersignalen (F, M), wobei diese Anordnung die nachfolgenden Elemente umfasst:
- Mittel (ME) zum Ermitteln erster Bewegungsvektoren für ein erstes Teilbild, und zweiter Bewegungsvektoren für ein nachfolgendes zweiten Teilbild eines Bildsignals; und
- Mittel (L, ΣT, DT, COMP1, COMP2) zum Vergleichen der genannten ersten und zweiten Bewegungsvektoren zum Erhalten von Bildsignalverarbeitungsmode-Steuersignalen (F, M), die angeben, ob das genannte Bildsignal von einem Kinofilm herrührt.

9. Empfänger für Fernsehsignale, wobei dieser Empfänger die nachfolgenden Elemente umfasst:
- Mittel zum Empfangen und Decodieren der genannten Fernsehsignale zum Erhalten von Bildsignalen;
- Mittel, die mit den genannten Empfangs- und Decodierungsmitteln gekoppelt sind zum Verbessern der genannten Bildsignale,
**dadurch gekennzeichnet, dass** die genannten Verbesserungsmittel eine Anordnung aufweisen zum Erzeugen von Bilsignalverarbeitungsmode-Steuersignalen, wie in Anspruch 8 definiert.

## Revendications

1. Procédé pour générer des signaux de commande de mode de traitement de signal d'image (F, M), le procédé comprenant les étapes suivantes :
- déterminer (ME) des premiers vecteurs de mouvement pour une première trame, et des deuxièmes vecteurs de mouvement pour une deuxième trame suivante d'un signal d'image, et
- comparer (L, Σ*T*, DT, COM1, COMP2) lesdits premier et deuxième vecteurs de mouvement pour obtenir des signaux de commande de mode de traitement de signal d'image (F, M) qui indiquent si ledit signal d'image provient d'un film.

2. Procédé suivant la revendication 1, dans lequel ladite étape de comparaison comprend les étapes supplémentaires suivantes :
- déterminer (L, Σ2*T*) une somme de longueurs desdits premier et deuxième vecteurs de mouvement pour obtenir un signal d'activité, et
- ne modifier (COMP-A, AND1, AND2, FF) lesdits signaux de commande de mode de traitement de signal d'image (F,M) que quand ledit signal d'activité a une relation prédéterminée (COMP-A) avec un seuil d'activité (ThA).

3. Procédé suivant la revendication 2, dans lequel lesdits signaux de commande de mode de traitement de signal d'image (F, M) ne sont modifiés que quand le signal d'activité dépasse (COMP-A) ledit seuil d'activité (ThA).

4. Procédé suivant la revendication 1, dans lequel ladite étape de comparaison comprend en outre les étapes suivantes :
- déterminer (Σ*T*, DT) un premier total de longueurs desdits premiers vecteurs de mouvement, et un deuxième total de longueurs desdits deuxièmes vecteurs de mouvement, et
- modifier lesdits signaux de commande de mode de traitement de signal d'image (F, M) pour indiquer un film quand (COMP1, COMP2, OU) lesdits premier et deuxième totaux différent de plus de seuils donnés (Th) et pour ne pas indiquer un film quand lesdits premier et deuxième totaux diffèrent de moins desdits seuils donnés (Th).

5. Procédé suivant la revendication 4, dans lequel lesdits seuils donnés (Th) dépendent dudit premier ou dudit deuxième total (Σ*T*).

6. Procédé suivant la revendication 4, dans lequel lesdits signaux de commande de mode de traitement de signal d'image (F, M) indiquent un premier type de signaux d'image provenant d'un film quand ledit premier total est plus petit que ledit deuxième total de plus d'un premier seuil donné (Th), tandis que lesdits signaux de commande de mode de traitement de signal d'image (F, M) indiquent un deuxième type de signaux d'image provenant d'un film quand ledit premier total est plus grand que ledit deuxième total de plus d'un deuxième seuil donné (Th).

7. Procédé suivant la revendication 1, dans lequel lesdits signaux de commande de mode de traitement de signal d'image (F, M) indiquent comment les trames du signal d'image se rapportent aux images d'un film.

8. Appareil pour générer des signaux de commande de mode de traitement de signal d'image (F, M), l'appareil comportant :
- un moyen (ME) pour déterminer des premiers vecteurs de mouvement pour une première trame, et des deuxièmes vecteurs de mouvement pour une deuxième trame suivante d'un signal d'image, et
- un moyen (L, Σ*T*, DT, COMP1, COMP2) pour comparer lesdits premier et deuxième vecteurs de mouvement afin d'obtenir des signaux de commande de mode de traitement de signal d'image (F, M) qui indiquent si le signal d'image provient d'un film.

9. Récepteur pour des signaux de télévision, comportant
- un moyen pour recevoir et décoder lesdits signaux de télévision afin d'obtenir des signaux d'image;
- un moyen connecté audit moyen de réception et de décodage pour améliorer lesdits signaux d'image,
**caractérisé en ce que** ledit moyen d'amélioration comprend un appareil pour générer des signaux de commande de mode de traitement de signal d'image tel que défini à la revendication 8.
